# EUROPEAN PATENT APPLICATION

(11) **EP 1 426 913 A1**
(43) Date of publication of application: **09.06.2004**
(21) Application number: 02772843.5
(22) Date of filing: 10.09.2002
(51) Int. Cl.: G09F 1/00

(54) **CAR-MOUNTED DISPLAY AND CAR NAVIGATION SYSTEM**

(30) Priority: 10.09.2001 JP 2001272929; 10.09.2001 JP 2001272930
(71) Applicant: Sony Corporation, Tokyo 141-0001 (JP)
(72) Inventor: INO, Masumitsu c/o SONY CORPORATION, Tokyo 141-0001 (JP); OCHIAI, Masahiro c/o SONY CORPORATION, Tokyo 141-0001 (JP); YAMAGUCHI, Hidemasa c/o SONY CORPORATION, Tokyo 141-0001 (JP); MAEKAWA, Toshikazu c/o SONY CORPORATION, Tokyo 141-0001 (JP)
(74) Representative: Müller, Frithjof E., Dipl.-Ing.
(86) International application number: PCT/JP2002/009204
(87) International publication number: WO 2003/030130

(57) **Abstract**

A car-mounted display device improves the visibility of a display image from the driver's seat and the front passenger's seat and prevents the display image from being reflected in side windows, and a car navigation system uses the car-mounted display device as a monitor. In a case in which a liquid crystal display device is disposed at the center of a dashboard, the visibility at the driver's seat and the front passenger's seat is optimized by setting the change in luminance or contrast to be approximately 20 dB (10x) or less within an angle of approximately 40° on the right and left sides of the center. Moreover, the luminance or contrast is set to decrease by -20 dB or more beyond approximately 40° on the right and left sides of the center.

## Description

### Technical Field

The present invention relates to a car-mounted display device and a car navigation system, and more particularly, to a car-mounted display device disposed for use at the center of a dashboard of a car, and to a car navigation system using the car-mounted display device as a monitor.

### Background Art

Recently, car navigation systems have rapidly become popular. In car navigation systems, from the viewpoint of safety, a passenger sitting in the front passenger's seat tells a driver about a display image on a display device during driving, or, when there is no other passenger or when the driver wants to check the display image, the driver checks the display image after stopping the car. Therefore, a display screen of the display device needs to be reliably viewed from both the driver's seat and the front passenger's seat.

Liquid crystal display devices, having the advantages of small size and low power consumption, are commonly used as display devices of car navigation systems. It is known that, in liquid crystal display devices, the transmittance with respect to the same liquid crystal voltage differs depending on the angle at which the display screen is viewed, that is, there is a viewing-angle dependency. When the viewing-angle dependency is strong, the range of angles at which the display screen can be viewed is limited.

A technique for liquid crystal display devices is known in which the viewing angle of a liquid crystal panel can be increased as a whole by obtaining different liquid crystal pixel voltages in one pixel or in adjoining pixels in response to the same signal voltage, and the liquid crystal voltage is sequentially changed from the top to the bottom of the screen by sequentially increasing or decreasing a compensating potential along with the scanning from the top to the bottom of the screen in order to eliminate the viewing-angle dependency on the angle at which the screen is viewed (see Japanese Patent No. 3011072).

Another technique for liquid crystal display devices is known which provides a luminance distribution such that the luminance is highest on the front side and gently decreases as the viewing angle increases above a predetermined value (see Japanese Patent No. 3106055).

However, the former technique is premised on liquid crystal display devices used as monitors of TVs (televisions) and computers, and the viewing angle is deliberately made wide. In a case in which this technique is used for a car-mounted display device, when the viewing angle is wider than necessary, a display image is reflected in the right and left windows of the car because of the wide viewing angle, and this causes trouble during driving when looking to the right and left, for example, in order to turn the car and to check for pedestrians.

In contrast, the latter technique is premised on liquid crystal display devices in notebook personal computers, portable liquid crystal TVs, and liquid crystal TVs with a video cassette recorder. There is provided a luminance distribution in which the luminance is highest on the front side and gently decreases as the viewing angle increases above a predetermined value. In a case in which the technique is used for a car-mounted display device, since the luminance gently decreases, a display image is thereby reflected in the right and left side windows of the car, and this causes trouble during driving when looking to the right and left, for example, in order to turn the car and to check for pedestrians.

Car-mounted display devices are required to have directivity in the viewing angle and the luminance distribution, which is different from devices for computers and TVs. In particular, a liquid crystal display device for use in a car navigation system is required to improve the visibility from both the driver's seat and the front passenger's seat. Moreover, an image displayed on the liquid crystal display device must not to be reflected in other parts, particularly in side windows, in order to prevent the driver from experiencing trouble while driving.

Accordingly, an object of the present invention is to provide a car-mounted display device that improves the visibility of the display image from the driver's seat and the front passenger's seat and that prevents the display image from being reflected in side windows, and a car navigation system using the car-mounted display device as a monitor.

### Disclosure of Invention

In order to achieve the above object, a car-mounted display device of the present invention is disposed at the center front of the interior of a car, and has a luminance distribution or contrast distribution in which the peak is at the center in the lateral direction of a display screen and the change in luminance or contrast is less than -20 dB and more than approximately 0 dB. This car-mounted display device is used as a monitor of a car navigation system.

In the car-mounted display device having the above features or the car navigation system using the display device as a monitor, by setting the luminance distribution or contrast distribution so that the change in luminance or contrast is less than approximately -20 dB and more than approximately 0 dB, the change in luminance or contrast can be limited to ten times or less with respect to the viewing angle, and good luminance and contrast conditions are achieved. Consequently, the visibility of the display image is improved.

Another car-mounted display device of the present invention is disposed at the center front of the interior of a car, and has a luminance distribution or contrast distribution in which peaks are between approximately 25° and approximately 35° on the right and left sides of the center in the lateral direction of a display screen. This car-mounted display device is used as a monitor of a car navigation system.

In the car-mounted display device having the above features or the car navigation system using the display device as a monitor, since the front passenger's seat and the driver's seat are disposed at approximately 30° to the display screen on the right and left sides, the luminance distribution or contrast distribution in which peaks are between approximately 25° and approximately 35° on the right and left sides of the display screen provides optimum visibility of the display image from the driver's seat and the front passenger's seat.

A further car-mounted display device of the present invention is disposed at the center front of the interior of a car, and has a luminance distribution or contrast distribution in which the luminance or contrast changes by 30% or more from a peak between approximately 40° and approximately 60° on the right and left sides of the center of a display screen. This car-mounted display device is used as a monitor of a car navigation system.

The car-mounted display device having the above features or the car navigation system using the display device as a monitor has the luminance distribution or contrast distribution in which the luminance or contrast changes by 30% or more between approximately 40° and approximately 60° on the right and left sides of the center. Since the luminance or contrast at the right and left side windows is extremely lower than at the driver's seat and the front passenger's seat, the display image can be prevented from being reflected in the right and left side windows.

### Brief Description of the Drawings

Fig. 1 is a cross-sectional view showing the internal configuration of a car-mounted liquid crystal display device according to a first embodiment of the present invention.
Fig. 2 is a perspective view showing the configuration of a back optical system except a light control film.
Fig. 3 is a view showing the placement of the car-mounted display device.
Fig. 4 is a graph showing a luminance distribution in a first example of the first embodiment.
Fig. 5 is a graph showing a contrast distribution in the first example of the first embodiment.
Fig. 6 is a view showing the alignment characteristic of a downward prism sheet.
Fig. 7 is a view showing the alignment characteristic of an upward prism sheet.
Fig. 8 is a V-T characteristic view of the liquid crystal display device.
Fig. 9 is a graph showing a luminance distribution in a second example of the first embodiment.
Fig. 10 is a graph showing a contrast distribution in the second example of the first embodiment.
Fig. 11 is a graph showing a luminance distribution in a third example of the first embodiment.
Fig. 12 is a graph showing a contrast distribution in the third example of the first embodiment.
Fig. 13 is a cross-sectional view showing the internal configuration of a car-mounted liquid crystal display device according to a second embodiment of the present invention.
Figs. 14A and 14B are a perspective view and a front view, respectively, showing an example of a structure of a light-reflecting member disposed in a light guide plate.
Fig. 15 a graph showing a luminance distribution or contrast distribution in a first example of the second embodiment.
Fig. 16 is a graph showing a luminance distribution or contrast distribution in a second example of the second embodiment.
Fig. 17 is a graph showing a luminance distribution or contrast distribution in a third example of the second embodiment.
Fig. 18 is a graph showing a luminance distribution or contrast distribution in a fourth example of the second embodiment.
Fig. 19 is a graph showing a luminance distribution or contrast distribution in a fifth example of the second embodiment.
Fig. 20 is a graph showing a luminance distribution or contrast distribution in a sixth example of the second embodiment.
Fig. 21 is an explanatory view showing a definition of a measuring point at which the luminance and contrast of the liquid crystal display device are measured.
Figs. 22 (A) and 22 (B) are a side view and a plan view, respectively, of the liquid crystal display device, showing actual measuring points in a display region.
Fig. 23 is a block diagram showing an example of a configuration of a car navigation system according to the present invention.

### Best Mode for Carrying Out the Invention

Embodiments of the present invention will be described in detail below with reference to the drawings.

### [First Embodiment]

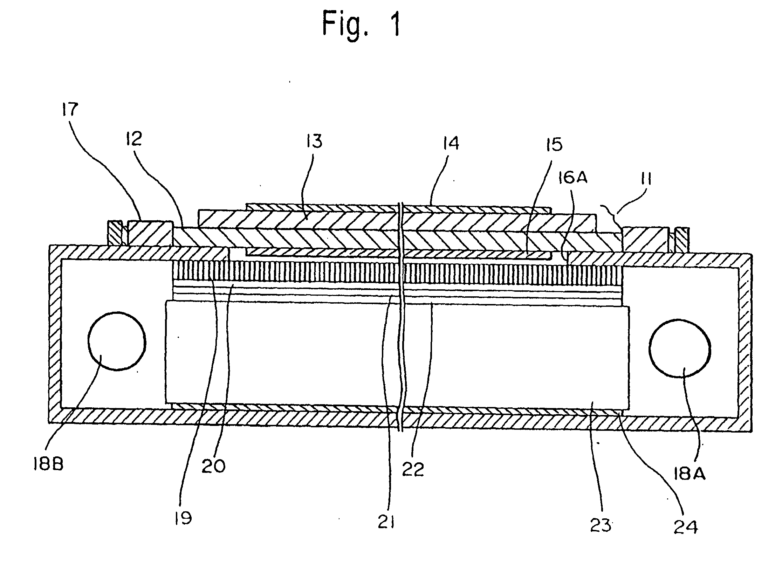

Fig. 1 is a cross-sectional view showing the internal configuration of a car-mounted display device, for example, a car-mounted liquid crystal display device, according to a first embodiment of the present invention.

In Fig. 1, a liquid crystal panel 11 includes a TFT array substrate 12 in which TFTs (Thin Film Transistors) serving as switching elements for arrayed pixels, display electrodes, and so on are provided, and a counter substrate 13 in which counter electrodes and so on are provided. Liquid crystal is sealed between the substrates 12 and 13. As the TFT array substrate 12 and the counter substrate 13, transparent insulating substrates, for example, glass substrates, are used.

Polarizers 14 and 15, each of which has a wide-viewing-angle film and transmits or absorbs a specific polarized light component, are bonded to a front surface and a back surface of the liquid crystal panel 11. The liquid crystal panel 11 is mounted at an aperture 16A of a case-shaped chassis 16 while being aligned with the chassis 16 by a panel-positioning stopper 17. Inside the chassis 16, backlights 18A and 18B, such as cold cathode fluorescent lamps, are disposed on the upper side (right side in the figure) and on the lower side (left side in the figure) of an area in which the liquid crystal panel 11 is disposed.

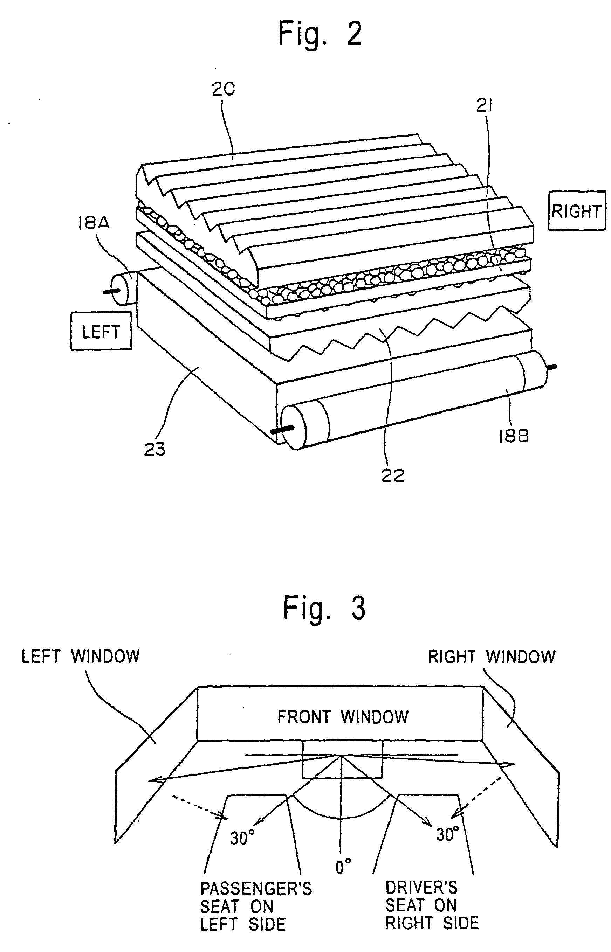

A light control film 19, an upward prism sheet 20, a diffusing sheet 21, a downward prism sheet 22, a light guide plate 23, and a reflecting sheet 24 are disposed in that order on the back side of the liquid crystal panel 11. These components constitute a back optical system with the backlights 18A and 18B. Fig. 2 is a perspective view showing the configuration of the back optical system except the light control film 19.

In the back optical system, the backlights 18A and 18B are light sources for liquid crystal display, and are provided along the lateral direction of a display screen. The light control film 19 serves a function of blocking vertical light for a driver or a passenger sitting in a front passenger's seat (hereinafter sometimes simply referred to as a "driver"). The upward prism sheet 20 is composed of prism lenses shaped like a triangular prism and arranged at regular intervals in the up-down direction, as shown in Fig. 2, and is placed with its prism surface facing upward (in the light emergent direction) in order to collect vertical light for the driver.

The diffusing sheet 21 uniformly applies light given from the backlights 18A and 18B onto the liquid crystal panel 11 in order to make the luminance uniform. The downward prism sheet 22 is composed of prism lenses shaped like a triangular prism and arranged at regular intervals in the lateral direction, as shown in Fig. 2, and is placed with its prism surface facing downward (in the light incident direction) in order to scatter light given from the backlights 18A and 18B. The light guide plate 23 serves to guide light given from the backlights 18A and 18B toward the liquid crystal panel 11. The reflecting sheet 24 serves to reflect light incident on the light guide plate 23 toward the liquid crystal panel 11.

The car-mounted liquid crystal display device of this embodiment having the above-described configuration is used, for example, as a monitor of a car navigation system, and is disposed at the center front of the interior of a car, more specifically, at the center of a dashboard, as shown in Fig. 3. In such a case in which the liquid crystal display device is disposed at the center of the dashboard, the front passenger's seat and the driver's seat are disposed at an angle of approximately 30° to the display surface of the liquid crystal display device on the right and left sides thereof.

### (First Example)

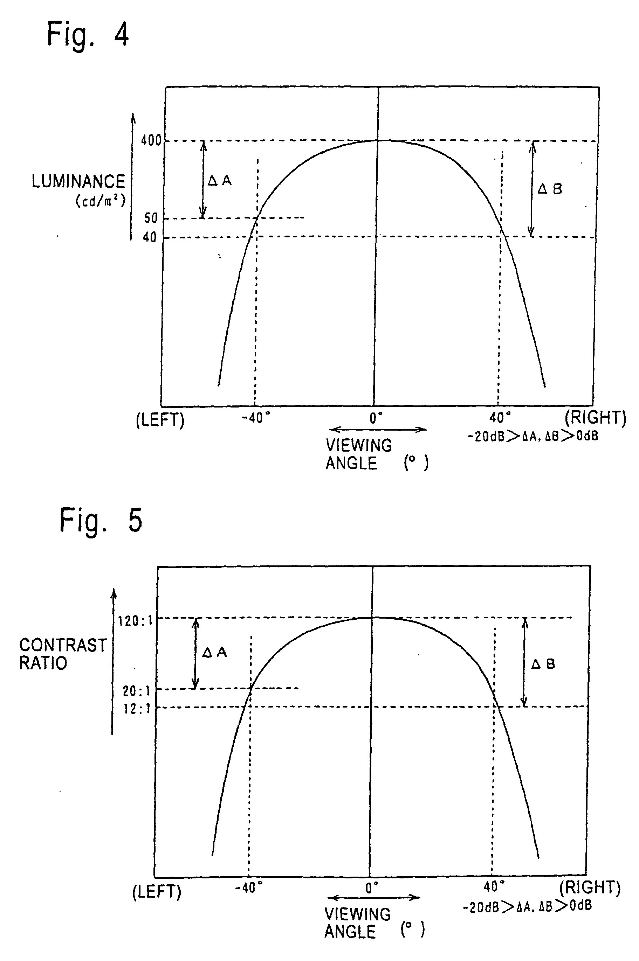

In a first example, a luminance distribution in which the peak is at the center in the lateral direction of the display screen is determined so that the change in luminance is less than approximately -20dB (10x) and is more than approximately 0 dB (1x), as shown in Fig. 4. Similarly, a contrast distribution in which the peak is at the center in the lateral direction of the display screen is determined so that the change in contrast is less than approximately -20 dB (10x) and more than approximately 0 dB (1x), as shown in Fig. 5.

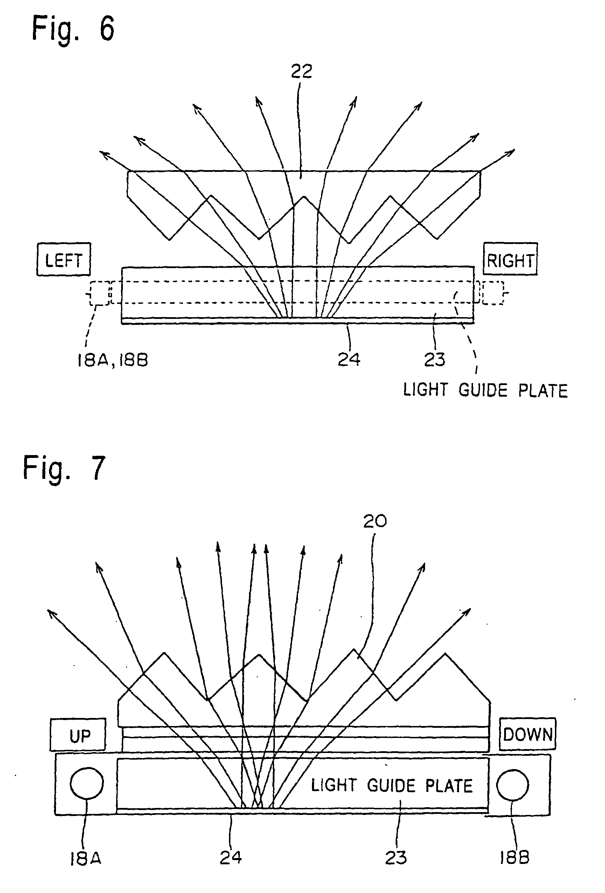

The above-described luminance distribution or contrast distribution can be achieved by uniformly dispersing the luminance or contrast of the liquid crystal, which is originally concentrated at the center, through the downward prism sheet 22, as shown in Fig. 6. In addition, the contrast difference depending on the viewing angle can be minimized by reducing the voltage amplitudes for black signals in signals to be applied to the liquid crystal in the liquid crystal panel 11.

In order to interpolate the attenuation of light due to the dispersion by the downward prism sheet 22, light is collected in a predetermined direction by using the upward prism sheet 20, as shown in Fig. 7. Consequently, in particular, it is possible to collect, to the center, light traveling in the up-down direction of the liquid crystal panel 11 and to ensure the luminance and contrast that allow the device to be used in a car.

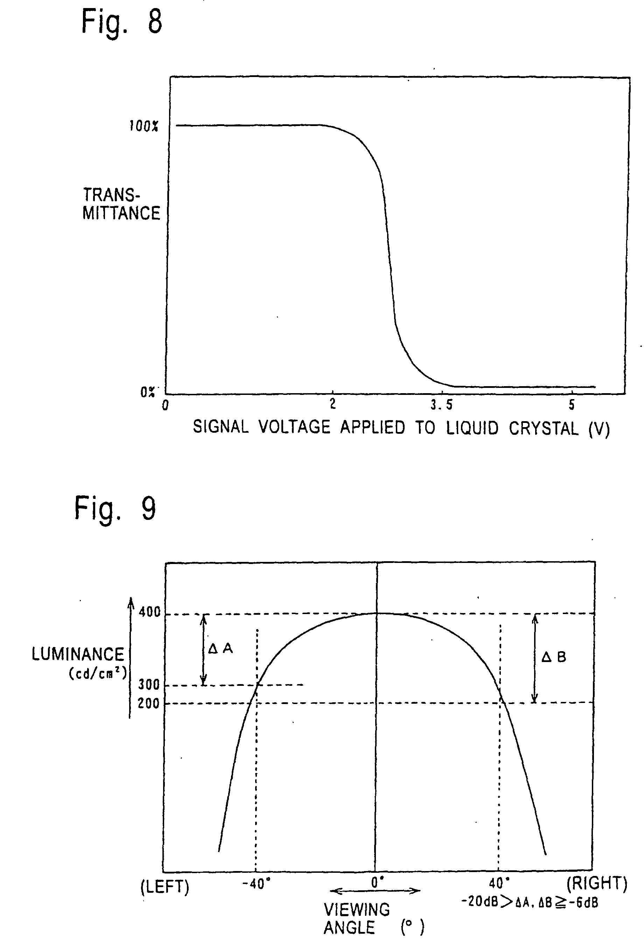

The contrast distribution can be controlled by adjusting the amplitudes of signal voltages to be applied to the liquid crystal in the liquid crystal panel 11 or by adjusting the viewing angle of the wide-viewing-angle films on the polarizers 14 and 15. Fig. 8 shows the relationship between the signal voltage V to be applied to the liquid crystal, and the transmittance T of the liquid crystal. The contrast can be substantially adjusted by changing the transmittance T with respect to the signal voltage V to be applied to the liquid crystal. More specifically, the contrast represented by the transmittance T can be decreased by reducing the amplitude of the signal voltage V.

In this way, in a case in which the liquid crystal display device is disposed at the center of the dashboard, the luminance distribution or contrast distribution is determined so that the peak is at the center in the lateral direction of the display screen and so that the change in luminance or contrast is less than approximately -20 dB (10x) and more than approximately 0 dB (1x). This can increase the visibility of the display image because a good luminance or contrast condition is ensured in the liquid crystal display, in which the change in luminance or contrast is limited to 10x or less with respect to the viewing angle.

The reason is as follows. Human sense can perceive a change of a value by 10x or more, as expressed in decibels. This rule also applies to image changes. When the change in luminance or contrast is 10x or less, it is hard for humans to determine that visibility is reduced. Therefore, in the car-mounted liquid crystal display device, the visibility of the display image can be increased by limiting the change in luminance or contrast to 10x or less with respect to the viewing angle.

### (Second Example)

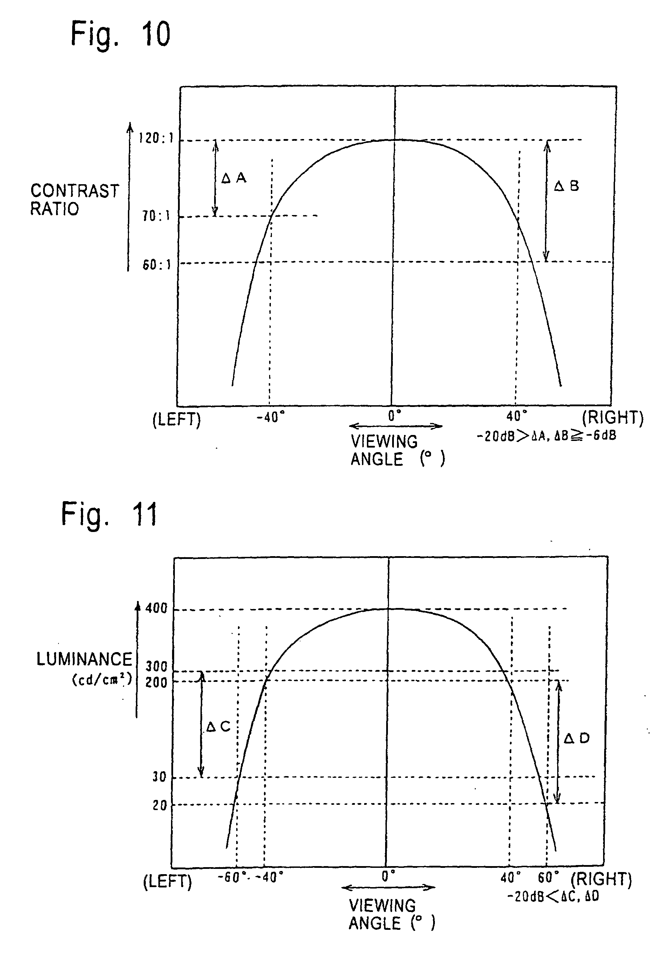

In a second example, in a luminance distribution in which the peak is at the center in the lateral direction of the display screen, the change in luminance from the peak is set to be less than or equal to approximately -20 dB (10x) and more than approximately -6 dB (50%) within approximately 40° on the right and left sides of the center, as shown in Fig. 9. Similarly, in a contrast distribution in which the peak is at the center in the lateral direction of the display screen, the change in contrast from the peak is set to be less than or equal to approximately -20 dB and more than or equal to approximately -6 dB within approximately 40° on the right and left sides of the center, as shown in Fig. 10.

In a manner similar to that in the first example, the luminance distribution or contrast distribution can be achieved by uniformly dispersing light through the downward prism sheet 22. The contrast can be achieved by adjusting the amplitudes of signal voltages to be applied to the liquid crystal or by adjusting the viewing angle of the wide-viewing-angle films.

In such a luminance distribution or contrast distribution in which the peak is at the center in the lateral direction of the display screen, the visibility of the display image from the driver's seat and the front passenger's seat can be improved by setting the change in luminance or contrast at approximately ten times or less within approximately 40° on the right and left sides of the center. In a case in which the liquid crystal display device is disposed at the center of the dashboard, since the driver's seat and the front passenger's seat are disposed, respectively, at an angle of approximately 30° on the right and left sides to the liquid crystal display device, the visibility of the display image from the seats can be markedly improved by setting the change in luminance or contrast at ten times or less within approximately 40° on the right and left sides, in consideration of slight movement of the driver or the passenger in the seats. Incidentally, a change of approximately -6 dB (50%) is considered a general characteristic.

### (Third Example)

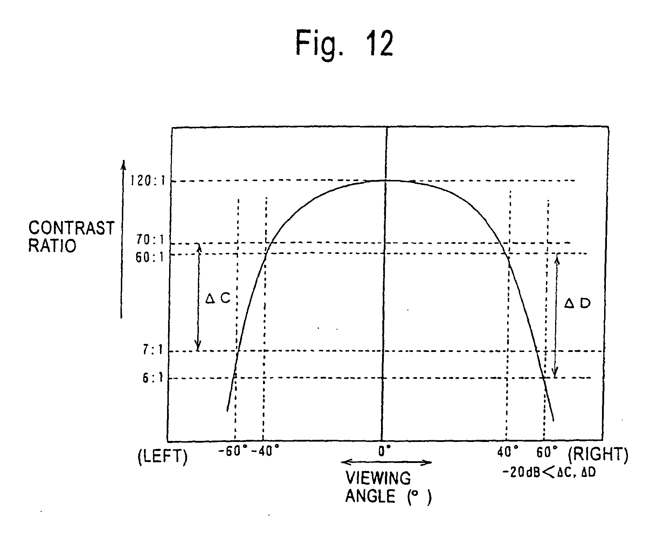

In a third example, a luminance distribution in which the peak is at the center in the lateral direction of the display screen is determined so that the luminance decreases by approximately -20 dB (10x) or more beyond approximately 40° on the right and left sides of the center, as shown in Fig. 11. Similarly, a contrast distribution in which the peak is at the center in the lateral direction of the display screen is determined so that the contrast decreases by approximately -20 dB or more beyond approximately 40° on the right and left sides of the center, as shown in Fig. 12.

In this case, the luminance distribution or contrast distribution can also be achieved by uniformly dispersing light through the downward prism sheet 22, in a manner similar to that in the first example. The contrast can be achieved by adjusting the amplitudes of signal voltages to be applied to the liquid crystal or by adjusting the viewing angle of the wide-viewing-angle films.

When the luminance or contrast is decreased by approximately -20 dB or more beyond approximately 40° on the right and left sides of the center under optimum visibility conditions at the driver's seat and the front passenger's seat, the luminance or the viewing angle suddenly decreases beyond approximately 40°. Therefore, reflection in the right and left side windows, when viewed from the driver's seat, due to the luminance distribution or viewing-angle distribution can be prevented. Consequently, driving trouble resulting from the reflection of the display image on the liquid crystal display device in the right and left side windows of the car can be prevented.

### [Second Embodiment]

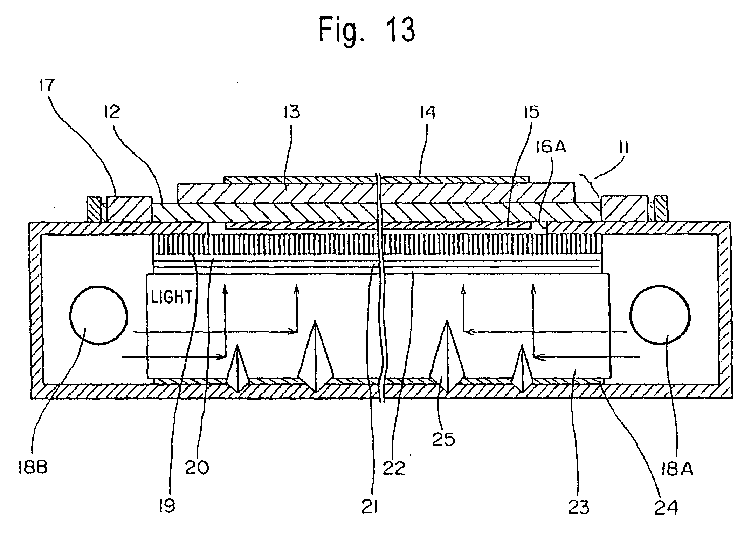

Fig. 13 is a cross-sectional view showing the internal configuration of a car-mounted display device, for example, a car-mounted liquid crystal display device, according to a second embodiment of the present invention. In the figure, components equivalent to those in Fig. 1 are denoted by the same reference numerals.

The car-mounted liquid crystal display device of this embodiment is different in configuration from the car-mounted liquid crystal display device of the first embodiment in that multiple large and small light-reflecting members 25 are arranged in a light guide plate 23 that serves to guide light given out from backlights 18A and 18B (hereinafter referred to as "backlight light") toward a liquid crystal panel 11.

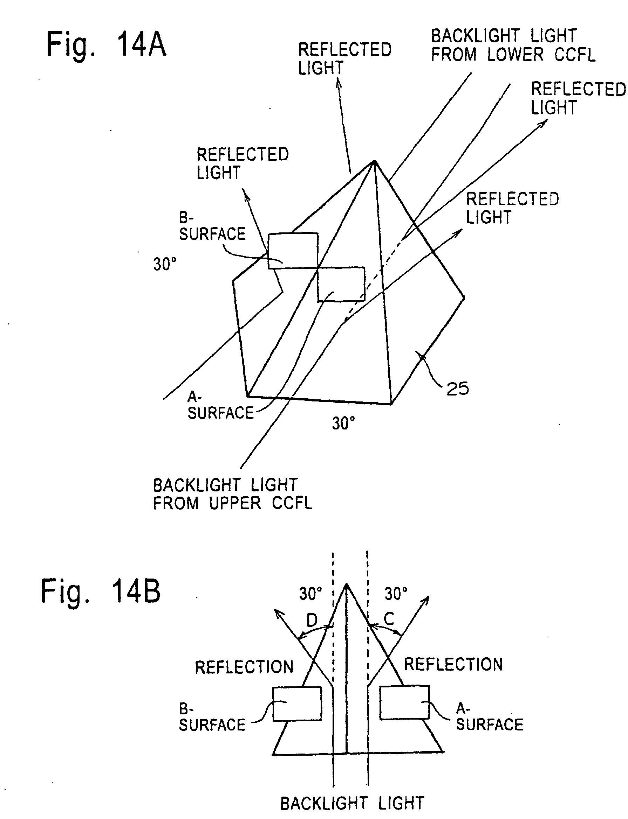

As is evident from Fig. 14A, the light-reflecting members 25 are shaped like, for example, a pentahedron, and reflect backlight light in the direction of the normal to the liquid crystal panel 11. In this case, horizontal backlight light becomes incident on an A-surface or a B-surface shown in Figs. 14A and 14B, and is reflected thereby. By adjusting reflection angles C and D of the reflecting surfaces A and B, the luminance distribution of the liquid crystal panel 11 can be determined.

The structure of the light-reflecting members 25 is not limited to the above-described pentahedral structure. As long as the light-reflecting members 25 have three or more surfaces, the desired objective can be accomplished. By changing the arrangement distribution of prism lens in a downward prism sheet 22, a desired luminance distribution can be achieved.

The car-mounted liquid crystal display device of this embodiment having the above configuration is also used as, for example, a monitor of a car navigation system, and is disposed at the center front of the interior of a car, more specifically, at the center of a dashboard (see Fig. 3).

### (First Example)

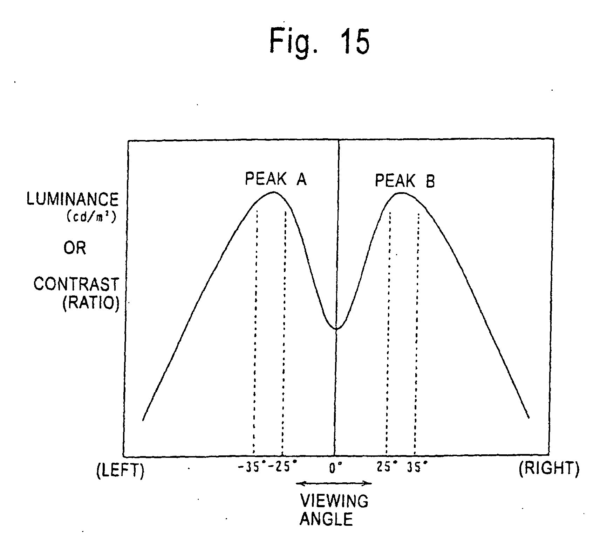

In a first example, regarding the luminance or contrast characteristic of the liquid crystal display device, as shown in Fig. 15, a luminance distribution or contrast distribution is determined so that peaks are between approximately 25° and approximately 35°, more preferably, at approximately 30°, on the right and left sides. In the luminance distribution, the luminance peaks can be ensured between approximately 25° and approximately 35° on the right and left sides by adjusting the distribution of the prism lenses in the downward prism sheet 22 or by adjusting the angles of the reflecting surfaces of the light-reflecting members 25 arranged in the light guide plate 23.

On the other hand, in the contrast distribution, the contrast peaks can be ensured between approximately 25° and approximately 35° on the right and left sides by adjusting the amplitudes of signal voltages to be applied to the liquid crystal in the liquid crystal panel 11 or by adjusting the viewing angle of wide-viewing-angle films on polarizers 14 and 15. As described above, the contrast can be substantially adjusted by changing the transmittance T with respect to the signal voltage V to be applied to the liquid crystal, as in the V-T characteristic shown in Fig. 8.

In such a case in which the liquid crystal display device is disposed at the center of the dashboard, since the driver's seat and the front passenger's seat are disposed, respectively, at an angle of approximately 30° to the display screen on the right and left sides, the visibility of the display image from the driver's seat and the front passenger's seat can be optimized by determining the luminance distribution or contrast distribution so that peaks are between approximately 25° and approximately 35°, more preferably, at approximately 30°, on the right and left sides.

While the peak value on the driver's seat side and the peak value on the front passenger's seat side are set to be substantially equal in the luminance distribution or contrast distribution shown in Fig. 15, there is sometimes no passenger sitting in the front passenger's seat, and the driver's seat side is the main side. Therefore, the visibility of the display image when viewed from the driver's seat can be further optimized by setting the peak value on the driver's seat side higher than on the front passenger's seat side.

### (Second Example)

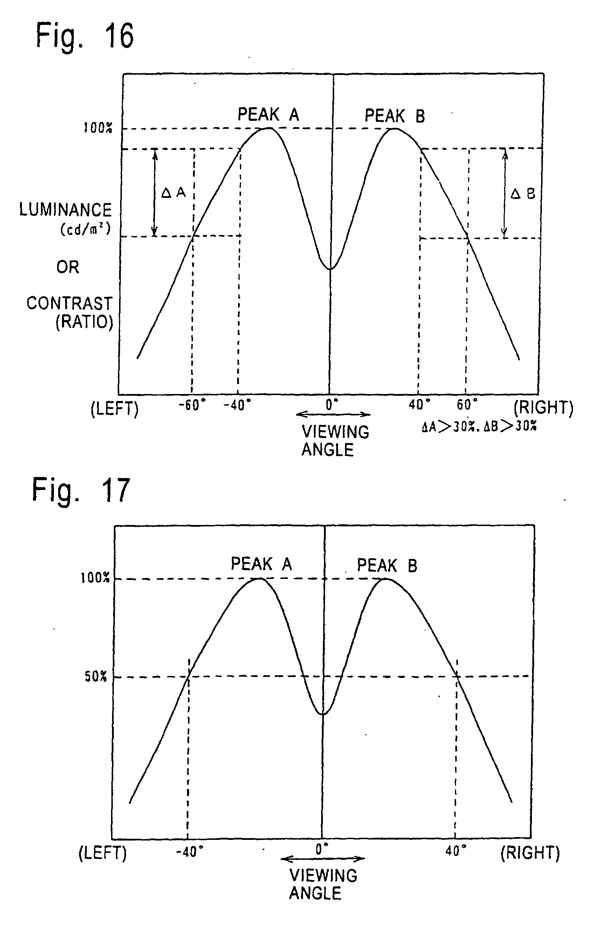

In a second example, a luminance distribution or contrast distribution in which peaks are between approximately 25° and approximately 35°, more preferably, at approximately 30°, on the right and left sides, as in the first example, is determined so that the value decreases by 30% or more at approximately 40° to approximately 60° on the right and left sides of the center, as shown in Fig. 16. In a manner similar to that in the first example, the luminance can be achieved by adjusting the distribution of the prism lenses in the downward prisms sheet 22 or by adjusting the angles of the reflecting surfaces of the light-reflecting members 25 arranged in the light guide plate 23. The contrast can be achieved by adjusting the amplitudes of signal voltages to be applied to the liquid crystal or by adjusting the viewing angle of the wide-viewing-angle films.

When the luminance distribution or contrast distribution is thus determined so that the value decreases by 30% or more at approximately 40° to approximately 60° on the right and left sides of the center under optimum visibility conditions at the driver's seat side and the front passenger's seat, the luminance or contrast at the right and left side windows is made extremely lower than that at the driver's seat or the front passenger's seat. Therefore, reflection of the display image in the right and left side windows can be prevented. Consequently, driving trouble resulting from the reflection of the display image on the liquid crystal display device in the right and left side windows of the car can be prevented.

### (Third Example)

In a third example, a luminance distribution or contrast distribution in which peaks are between approximately 25° and approximately 35° on the right and left sides, as in the first example, is determined so that the value decreases to 50% or less beyond approximately 40° on the right and left sides of the center, as shown in Fig. 17. In this case, the luminance can be controlled by adjusting the distribution of the prism lenses in the downward prism sheet 22 or by adjusting the angles of the reflecting surfaces of the light-reflecting members 25 arranged in the light guide plate 23. The contrast can be controlled by adjusting the amplitudes of signal voltages to be applied to the liquid crystal or by adjusting the viewing angle of the wide-viewing-angle films.

By thus determining the luminance distribution or contrast distribution so that the value decreases to 50% or less at approximately 40° to approximately 60° on the right and left sides of the center under optimum visibility conditions at the driver's seat and the front passenger's seat, the reflection of the display image in the right and left side windows can be more reliably prevented than in the second example.

### (Fourth Example)

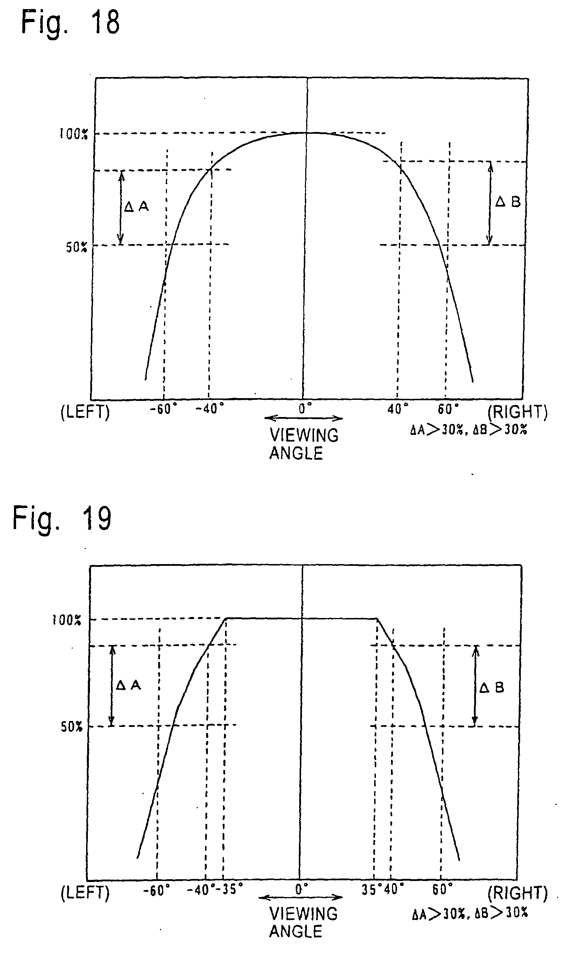

In a fourth example, a luminance distribution or contrast distribution in which the peak is at the center (approximately 0°) is determined so that the value decreases by 30% or more, more preferably, by 50% or more, at approximately 40° to approximately 60° on the right and left sides of the center, as shown in Fig. 18. In this case, the luminance can also be controlled by adjusting the distribution of the prism lenses in the downward prism sheet 22 or by adjusting the angles at the reflecting surfaces of the light-reflecting members 25 arranged in the light guide plate 23. The contrast can be controlled by adjusting the amplitudes of signal voltages to be applied to the liquid crystal or by adjusting the viewing angle of the wide-viewing-angle films.

In such a luminance distribution or contrast distribution in which the peak is at the center, the visibility is optimized between the driver's seat and the front passenger's seat, and is slightly low at the driver's seat and the front passenger's seat. However, since the luminance or contrast for the right and left side windows is made extremely lower than for the driver's seat and the front passenger's seat by setting the value to decrease by 30% or more at approximately 40° to approximately 60° on the right and left sides of the center, the display image can be prevented from being reflected in the right and left side windows.

### (Fifth Example)

In a fifth example, a luminance distribution or contrast distribution in which the value is fixed within approximately 35° on the right and left sides of the center is determined so that the value decreases by 30% or more, more preferably, by 50% or more, at approximately 40° to approximately 60° on the right and left sides of the center, as shown in Fig. 19. In this case, the luminance can also be controlled by adjusting the distribution of the prism lenses in the downward prism sheet 22 or by adjusting the angles of the reflecting surfaces of the light-reflecting members 25 arranged in the light guide plate 23. The contrast can be controlled by adjusting the amplitudes of signal voltages to be applied to the liquid crystal or by adjusting the viewing angle of the wide-viewing-angle films.

Since the luminance distribution or contrast distribution is thus fixed within approximately 35° on the right and left sides of the center, the visibility can be optimized at the driver's seat and the front passenger's seat, and therebetween. Moreover, since the luminance or contrast for the right and left side windows is made extremely lower than for the driver's seat and the front passenger's seat by determining the luminance distribution or contrast distribution so that the value decreases by 30% or more at approximately 40° to approximately 60° from the center on the right and left sides. This can prevent the display image from being reflected in the right and left side windows.

### (Sixth Example)

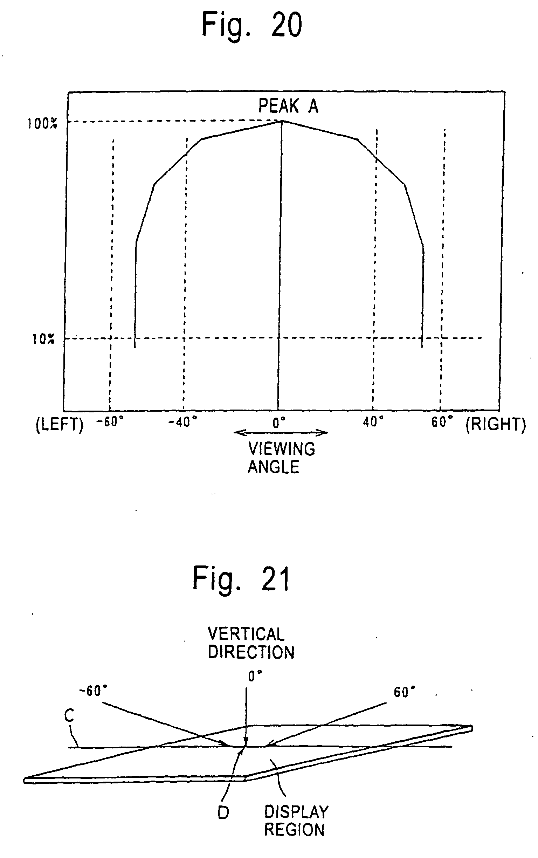

In a sixth example, a luminance distribution or contrast distribution in which the peak is at the center (approximately 0°) is determined so that the value suddenly decreases to approximately 10% between approximately 40° and approximately 60° on the right and left sides of the center, as shown in Fig. 20. In this case, the luminance can also be controlled by adjusting the distribution of the prism lenses of the downward prism sheet 22 or by adjusting the angles of the reflecting surfaces of the light-reflecting members 25 arranged in the light guide plate 23. The contrast can be controlled by adjusting the amplitudes of signal voltages to be applied to the liquid crystal, or by adjusting the viewing angle of the wide-viewing-angle films.

In such a luminance distribution or contrast distribution in which the peak is at the center, the visibility is optimal between the driver's seat and the front passenger's seat, and is slightly low at the seats. However, the luminance or contrast for the right and left side windows suddenly becomes lower than for the driver's seat and the front passenger's seat by determining the luminance distribution or contrast distribution so that the value suddenly decreases to approximately 10% between approximately 40° and approximately 60° on the right and left sides of the center. Therefore, it is possible to reliably prevent the display image from being reflected in the right and left side windows.

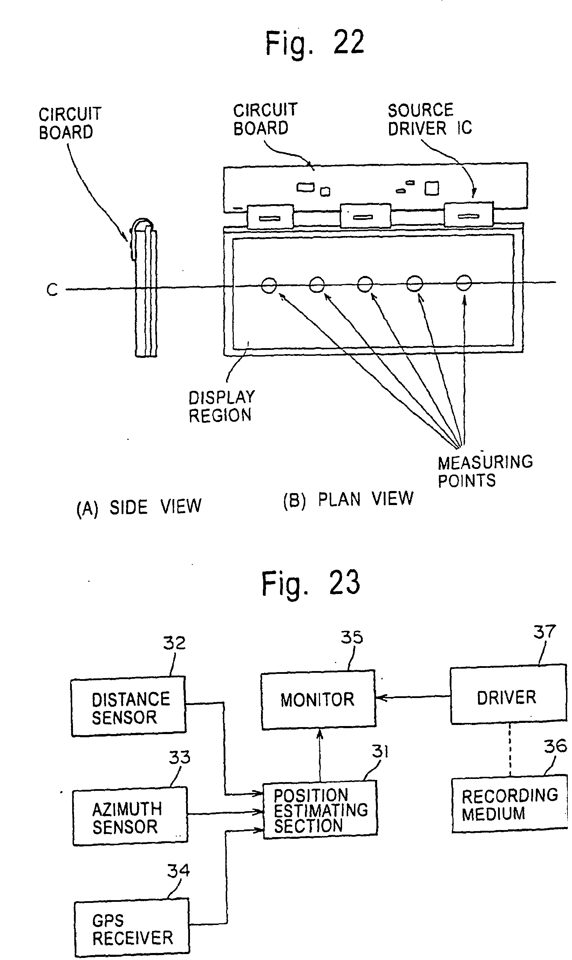

Measurement of the luminance and contrast of the liquid crystal display device will now be described with reference to Figs. 21 and 22. Fig. 21 is an explanatory view showing a definition of a measuring point, and Fig. 22 is a view showing actual measuring points on a display region. Figs. 22(A) and 22(B) are a side view and a plan view, respectively, of the liquid crystal display device.

As is evident from Figs. 21 and 22, the luminance and contrast of the liquid crystal display device are measured along a reference line C that is horizontally drawn in the center of the display region. In this case, measurement is taken while the viewing angles on the right and left sides of the center point D at 0° are used as parameters. In order to obtain the luminance distribution or contrast distribution in the above examples, the luminance distribution is determined by adjusting the distribution of the prism lenses of the downward prism sheet 22 or by adjusting the angles of the reflecting surfaces of the light-reflecting members 25 arranged in the light guide plate 23. The contrast distribution is determined by adjusting the amplitudes of signal voltages to be applied to the liquid crystal or by adjusting the viewing angle of the wide-viewing-angle films.

While the liquid crystal display devices using liquid crystal cells as display cells are described in the above embodiments, the present invention is not limited to the liquid crystal display devices. The present invention is also similarly applicable to other display devices such as an EL (electroluminescence) display device using EL elements as display cells. In short, it is satisfactory as long as the car-mounted display device can have the luminance or contrast distribution as described in the above examples.

Fig. 23 is a block diagram showing an example of a configuration of a car navigation system according to the present invention. In Fig. 23, a distance sensor 32 and an azimuth sensor 33 are connected to a position estimating section 31. The position estimating section 31 is, for example, a microcomputer, reads information about the moving distance and information about the change in azimuth angle, respectively, from the distance sensor 32 and the azimuth sensor 33, and estimates a current position of a car by dead reckoning navigation on the basis of the information.

A GPS (Global Positioning System) receiver 34 is also connected to the position estimating section 31. The position estimating section 31 corrects the estimation result on the basis of information about the direction and position from the GPS receiver 34, and gives final information about the current position of the car to a monitor 35. The monitor 35 displays a peripheral map by receiving map information recorded in a recording medium 36, such as a CD-ROM, through a driver 37, and also displays on the map the current position of the car given from the position estimating section 31.

In the car navigation system having the above configuration, the liquid crystal display device of the above-described first or second embodiment, that is, the liquid crystal display device having a luminance distribution or contrast distribution in any of the first to third examples of the first embodiment, or the liquid crystal display device having a luminance distribution or contrast distribution in any of the first to sixth examples of the second embodiment, is used as the monitor 35.

The liquid crystal display device having the luminance distribution or contrast distribution in the first example of the first embodiment can improve the visibility of the display image.

The liquid crystal display device having the luminance distribution or contrast distribution in the second example of the first embodiment can optimize the visibility at the driver's seat and at the front passenger's seat.

The liquid crystal display device having the luminance distribution or contrast distribution in the third example of the first embodiment can optimize the visibility at the driver's seat and at the front passenger's seat, and can prevent the display image from being reflected in the right and left side windows.

The liquid crystal display device having the luminance distribution or contrast distribution in the first or fifth example of the second embodiment can optimize the visibility at the driver's seat and the front passenger's seat. The fifth example can also prevent the display image from being reflected in the right and left side windows.

The liquid crystal display device having the luminance distribution or contrast distribution in the second or third example of the second embodiment can optimize the visibility at the driver's seat and the front passenger's seat, and can prevent the display image from being reflected in the right and left side windows.

The liquid crystal display device having the luminance distribution or contrast distribution in the fourth or sixth example of the second embodiment can prevent the display image from being reflected in the right and left side windows, although the visibility is slightly reduced at the driver's seat and at the front passenger's seat.

As is evident from the above description, since the liquid crystal display device of the above-described first or second embodiment is used as the monitor 35 in the car navigation system, navigation information can be offered to the driver and the passenger in the front passenger's seat in the best display state. Moreover, since the display image is not reflected in the right and left side windows, the best driving environment can be given to the driver.

While the car-mounted display device of the present invention is used as a monitor of a car navigation system in this application example, it is not limited to the application example, and may be used as, for example, a monitor of a car-mounted TV.

### Industrial Applicability

According to the present invention, in the car-mounted display device or the car navigation system using the display device as a monitor, the luminance distribution or contrast distribution is determined so that the change in luminance or contrast is less than approximately -20 dB and more than approximately 0 dB. Since the change in luminance or contrast is thereby limited to ten times or less with respect to the viewing angle, good luminance and contrast conditions are achieved, and the visibility of the display image can be improved.

Furthermore, the luminance distribution or contrast distribution is determined so that peaks are between approximately 25° and approximately 35° on the right and left sides of the center in the lateral direction of the display screen. Since the driver's seat and the front passenger's seat are disposed at approximately 30° to the display screen on the right and left sides, the visibility of the display image is optimized at the driver's seat and the front passenger's seat.

Furthermore, the luminance distribution or contrast distribution is determined so that the luminance or contrast changes by 30% or more between approximately 40° and approximately 60° on the right and left sides of the center. Since the luminance or contrast for the right and left side windows is thereby made extremely lower than for the driver's seat and at the front passenger's seat, the display image can be prevented from being reflected in the right and left side windows.

## Claims

1. A car-mounted display device disposed at the center front of the interior of a car, and having a luminance distribution or a contrast distribution in which the peak at the center in the lateral direction of a display screen and the change in the luminance or the contrast is less than approximately -20 dB and more than approximately 0 dB.

2. A car-mounted display device according to claim 1, wherein the change in the luminance or the contrast from the peak in the luminance distribution or the contrast distribution is approximately -20 dB or less within an angle of approximately 40° on the right and left sides of the center in the lateral direction of the display screen.

3. A car-mounted display device according to claim 2, wherein the change in the luminance or the contrast in the luminance distribution or the contrast distribution is approximately -6 dB or more.

4. A car-mounted display device according to claim 1, wherein the luminance or the contrast in the luminance distribution or the contrast distribution decreases by approximately -20 dB or more beyond an angle of approximately 40° on the right and left sides of the center in the lateral direction of the display screen.

5. A car-mounted display device according to claim 1, wherein display cells arrayed to constitute a display panel are liquid crystal cells.

6. A car-mounted display device according to claim 5, wherein an optical system for guiding light from a light source to the display panel includes a downward prism sheet for scattering the light, and the luminance distribution or the contrast distribution is uniformly dispersed by the downward prism sheet.

7. A car-mounted display device according to claim 5, wherein the contrast distribution is determined by adjusting the amplitudes of signal voltages to be applied to the liquid crystal cells.

8. A car-mounted display device according to claim 5, wherein the display panel is provided with a polarizer for transmitting or absorbing a specific polarized light component, and having a wide-viewing-angle filter, and the contrast distribution is determined by adjusting the viewing angle of the wide-viewing-angle filter.

9. A car-mounted display device disposed at the center front of the interior of a car, and having a luminance distribution or a contrast distribution in which peaks are between angles of approximately 25° and approximately 35° on the right and left sides of the center in the lateral direction of a display screen.

10. A car-mounted display device according to claim 9, wherein the luminance or the contrast in the luminance distribution or the contrast distribution changes from the peaks by 30% or more between angles of approximately 40° and approximately 60° on the right and left sides of the center in the lateral direction of the display screen.

11. A car-mounted display device according to claim 10, wherein the luminance or the contrast in the luminance distribution or the contrast distribution decreases to 50% or less beyond an angle of approximately 40° on the right and left sides of the center in the lateral direction of the display screen.

12. A car-mounted display device according to claim 9, wherein display cells arrayed to constitute a display panel are liquid crystal cells.

13. A car-mounted display device according to claim 12, wherein an optical system for guiding light from a light source to the display panel includes a downward prism sheet for scattering the light, and the luminance distribution is determined by adjusting the distribution of prism lenses provided in the downward prism sheet.

14. A car-mounted display device according to claim 12, wherein an optical system for guiding light from a light source to the display panel includes a light guide plate that has a light-reflecting member and that guides the light given from the light source toward the display panel by reflecting the light by the light-reflecting member, and wherein the luminance distribution is determined by adjusting the angle of a reflecting surface of the light-reflecting member.

15. A car-mounted display device according to claim 12, wherein the contrast distribution is determined by adjusting the amplitudes of signal voltages to be applied to the liquid crystal cells.

16. A car-mounted display device according to claim 12, wherein the display panel is provided with a polarizer for transmitting or absorbing a specific polarized light component, and having a wide-viewing-angle filter, and the contrast distribution is determined by adjusting the viewing angle of the wide-viewing-angle filter.

17. A car-mounted display device disposed at the center front of the interior of a car, and having a luminance distribution or a contrast distribution in which the luminance or the contrast changes from a peak by 30% or more between angles of approximately 40° and approximately 60° on the right and left sides of the center of a display screen.

18. A car-mounted display device according to claim 17, wherein the luminance distribution or the contrast distribution has the peak at the center in the lateral direction of the display screen.

19. A car-mounted display device according to claim 17, wherein the luminance or the contrast in the luminance distribution or the contrast distribution is fixed within an angle of approximately 35° on the right and left sides of the center in the lateral direction of the display screen.

20. A car-mounted display device according to claim 17, wherein the luminance or the contrast in the luminance distribution or the contrast distribution suddenly decreases to approximately 10% between angles of approximately 40° and approximately 60° on the right and left sides of the center in the lateral direction of the display screen.

21. A car-mounted display device according to claim 17, wherein display cells arrayed to constitute a display panel are liquid crystal cells.

22. A car-mounted display device according to claim 21, wherein an optical system for guiding light from a light source to the display panel includes a downward prism sheet for scattering the light, and the luminance distribution is determined by adjusting the distribution of prism lenses provided in the downward prism sheet.

23. A car-mounted display device according to claim 21, wherein an optical system for guiding light from a light source to the display panel includes a light guide plate that has a light-reflecting member and that guides the light given from the light source toward the display panel by reflecting the light by the light-reflecting member, and wherein the luminance distribution is determined by adjusting the angle of a reflecting surface of the light-reflecting member.

24. A car-mounted display device according to claim 21, wherein the contrast distribution is determined by adjusting the amplitudes of signal voltages to be applied to the liquid crystal cells.

25. A car-mounted display device according to claim 21, wherein the display panel is provided with a polarizer for transmitting or absorbing a specific polarized light component, and having a wide-viewing-angle filter, and the contrast distribution is determined by adjusting the viewing angle of the wide-viewing-angle filter.

26. A car navigation system using a car-mounted display device as a monitor disposed at the center front of the interior of a car, wherein the car-mounted display device has a luminance distribution or a contrast distribution in which the peak is at the center in the lateral direction of a display screen, and the change in the luminance or the contrast is less than approximately -20 dB and more than approximately 0 dB.

27. A car navigation system according to claim 26, wherein the change in the luminance or the contrast from the peak in the luminance distribution or the contrast distribution is approximately -20 dB or less within an angle of approximately 40° on the right and left sides of the center in the lateral direction of the display screen.

28. A car navigation system according to claim 27, wherein the change in the luminance or the contrast in the luminance distribution or the contrast distribution is approximately - 6 dB or less.

29. A car navigation system according to claim 26, wherein the luminance or the contrast in the luminance distribution or the contrast distribution decreases by approximately -20 dB or more beyond an angle of approximately 40° on the right and left sides of the center in the lateral direction of the display screen.

30. A car navigation system using a car-mounted display device as a monitor disposed at the center front of the interior of a car, wherein the car-mounted display device has a luminance distribution or a contrast distribution in which peaks are between angles of approximately 25° and approximately 35° on the right and left sides of the center in the lateral direction of a display screen.

31. A car navigation system according to claim 30, wherein the luminance or the contrast in the luminance distribution or the contrast distribution changes from the peaks by 30% or more between angles of approximately 40° and approximately 60° on the right and left sides of the center of the display screen.

32. A car navigation system according to claim 31, wherein the luminance or the contrast in the luminance distribution or the contrast distribution decreases to 50% or less beyond an angle of approximately 40° on the right and left sides of the center in the lateral direction of the display screen.

33. A car navigation system using a car-mounted display device as a monitor disposed at the center front of the interior of a car, wherein the car-mounted display device has a luminance distribution or a contrast distribution in which the luminance or the contrast changes from a peak by 30% or more between angles of approximately 40° and approximately 60° on the right and left sides of the center of a display screen.

34. A car navigation system according to claim 33, wherein the luminance distribution or the contrast distribution has the peak at the center in the lateral direction of the display screen.

35. A car navigation system according to claim 33, wherein the luminance or the contrast in the luminance distribution or the contrast distribution is fixed within an angle of approximately 35° on the right and left sides of the center in the lateral direction of the display screen.

36. A car navigation system according to claim 33, wherein the luminance or the contrast in the luminance distribution or the contrast distribution suddenly decreases to approximately 10% between angles of approximately 40° and approximately 60° on the right and left sides of the center in the lateral direction of the display screen.
